# EUROPEAN PATENT APPLICATION

(11) **EP 4 589 838 A1**
(43) Date of publication of application: **23.07.2025**
(21) Application number: 24152144.2
(22) Date of filing: 16.01.2024
(51) Int. Cl.: H02P 3/12, F03D 7/02, H02J 9/04, H02P 3/14, H02P 3/18, H02P 3/22, H02P 9/10, H02P 21/00, H02P 23/00, H02J 3/38

(54) **A METHOD FOR CONTROLLING AN ELECTRO-MECHANICAL ACTUATOR, ELECTRO-MECHANICAL ACTUATION SYSTEM AND WIND TURBINE**

(71) Applicant: Nordex Energy SE & Co. KG, 22419 Hamburg (DE)
(72) Inventor: RAVE, Christian, 22419 Hamburg (DE); GELLERMANN, Jan, 22419 Hamburg (DE)
(74) Representative: Völkl Siebenson Patentanwälte - Partnerschaft mbB

(57) **Abstract**

The present disclosure relates to a method for controlling an electro-mechanical actuator (250) of a wind turbine (100), in particular a servo motor (252) of a yaw or a pitch system of the wind turbine (100). The electro-mechanical actuator (250) is configured to be powered from a DC link intermediate circuit (220). The method comprises: determining whether at least one of a voltage demand and a power demand for operating the electro-mechanical actuator (220) at a specific operating point can be met by an output of a first converter (212), the first converter (212) being connected to a supply grid on its input side and configured to provide at least one of a first voltage and a first power to the DC link intermediate circuit (220); and, if at least one of the voltage demand and the power demand cannot be met by the output of the first converter (212), triggering a boost mode of a second converter (214) configured to be connected between the DC link intermediate circuit (220) and an energy storage unit (240). The boost mode is triggered to at least one of: boost the voltage at the DC link intermediate circuit (220) to a second voltage, the second voltage being higher than the first voltage; and boost the power supply to the electro-mechanical actuator (250) via the DC link intermediate circuit (220) to a second power, the second power being higher than the first power. The disclosure further relates to an electro-mechanical actuation system (200) and a wind turbine (100).

## Description

The invention generally relates to improved control of a wind turbine, and in particular to a method for controlling an electro-mechanical actuator of a wind turbine, an electro-mechanical actuation system for a wind turbine, and a wind turbine.

Wind turbines are widely known from the prior art and are used to convert wind energy into electrical energy. Among others, wind turbines may comprise one or more electro-mechanical actuators to control all or some of the subassemblies of the wind turbine, for instance servo motors for controlling yaw actuation of a nacelle, and pitch actuation of a blade of the wind turbine. Safe and efficient control of such actuators is important, among others, to prevent unsafe operating conditions, for example during extreme weather situations, like gusts. Another objective of implementing control features with respect to such actuators is to ensure optimal energy flow (and therefore energy management) between associated devices. This will optimize reliability of the associated devices in terms of handling certain adverse situations, including, but not limited to grid faults, hardware malfunctions, etc.

For these purposes, a wind turbine may comprise an intermediate circuit for providing power to an electro-mechanical actuator whenever necessary, e.g., to perform emergency pitching of the rotor blades. To supply power to the actuator even during a temporary disconnection of the wind turbine from an external power grid or during situations like grid fault ride-through (FRT), power may be selectively provided from a first converter connecting the intermediate circuit to a power grid. Examples of such grids include, but not limited to an internal auxiliary grid of the wind turbine or an external power grid, like those associated with a different energy source such as a diesel generator and so on. An alternate means of providing power to the intermediate circuit is from an energy storage unit connecting to the intermediate circuit. In case of pitch system, the energy storage unit is referred to as a pitch energy storage unit.

There is a general need for improved control of a wind turbine, in particular during exceptional operating conditions, such as wind gusts or during grid fault ride through (FRT) events. For example, it is desirable to improve an output of an electro-mechanical actuator for controlling a pitch or yaw angle, preferably without adding further or larger components to the wind turbine.

According to a first aspect of the present disclosure, a method for controlling an electro-mechanical actuator of a wind turbine, in particular a servo motor of a yaw or a pitch system of the wind turbine, is disclosed. The electro-mechanical actuator is configured to be powered from a DC link intermediate circuit. The method comprises the following steps:
- determining whether at least one of a voltage demand and a power demand for operating the electro-mechanical actuator at a specific operating point can be met by an output of a first converter, the first converter being connected to a supply grid on its input side and configured to provide at least one of a first voltage and a first power to the DC link intermediate circuit; and
- if at least one of the voltage demand and the power demand cannot be met by the output of the first converter, triggering a boost mode of a second converter configured to be connected between the DC link intermediate circuit and an energy storage unit to at least one of:
   ○ boost the voltage at the DC link intermediate circuit to a second voltage, the second voltage being higher than the first voltage, and
   ○ boost the power supplied to the electro-mechanical actuator via the DC link intermediate circuit to a second power, the second power being higher than the first power.

Among others, the inventors have found that an energy storage unit and associated second converter can be used to boost the voltage and/or power at a DC link intermediate circuit even in cases where a first converter connected to a supply grid is still capable of providing voltage and/or power. Such a boost functionality may be used to increase the performance of an electro-mechanical actuator, such as a servo motor, in various operating conditions, including during grid FRT.

An operating point may refer to a force or torque at a certain speed of the electro-mechanical actuator for performing a desired operation, for example a force or torque exceeding a predefined threshold or set-point value at a certain speed used in another, in particular a normal operating mode of the wind turbine. The term "operating point" may also refer to a usage scenario of the electro-mechanical actuator, such as a fast or emergency pitching or yaw operation. Typically, such operating points are assumed only for a relatively short period of time, i.e., they do not represent stationary states of the control of the wind turbine. They may last, for example, a few hundred milliseconds, ensuring that the energy storage unit is not drained by triggering the boost mode.

For example, in the case that the first converter is configured to provide a certain output voltage, a field weakening effect may limit the power of a servo motor at higher speeds. This may be the case if the first converter is implemented as a rectifier-type circuit. By using the second converter, the voltage of the DC link intermediate circuit may be raised beyond the peak output voltage of the first converter, such that the field weakening effect can be subsided or adjusted such that it only occurs at higher motor speeds. Accordingly, a higher torque, and thus a higher output power, of the actuator can be achieved.

Similarly, in the case that the output power of the first converter is limited, for example to a maximum current provided by switching components of the first converter, a torque of the electro-mechanical actuator may be limited by the available current. In this case, part of an operating power may be provided by the second converter from the energy storage unit, instead of or in addition to the power provided by the first converter. Similar to the above case, a higher torque and thus a higher output power of the electro-mechanical actuator can be achieved.

By using electrical energy stored in the energy storage unit as well as the second converter provided as a backup component during situations, not limited to complete grid failures, the output power of the electro-mechanical actuator can thus be improved without the need to provide a more powerful or more complex first converter having a higher output current or voltage from the supply grid, for example a step-up converter.

The second converter may be activated in addition to the first converter if at least one of the voltage demand and the power demand cannot be met by the output of the first converter. That is to say, the two converters can be controlled and/or operated in parallel, or in tandem, with each other. This may be the case, for example, if an output current shall be boosted. Alternatively, the second converter may take over the entire load in the boost mode. This may be the case, for example, if an output voltage shall be boosted.

The second converter may be configured to provide a variable output to the DC link intermediate circuit. Triggering the boost mode may further comprise determining at least one of the second voltage and the second power based on at least one of the voltage demand and the power demand for operating the electro-mechanical actuator and at least one of: setting a DC link intermediate circuit voltage set-point to the second voltage, and setting a power set-point for the power supply to the electro-mechanical actuator via the DC link intermediate circuit to the second power. Controlling the output voltage or the output power of the second converter enables, amongst others, to control the voltage or power provided through the DC link intermediate circuit to a level suitable for the present operating conditions, such as a desired speed, a desired torque, or a desired force of the electro-mechanical actuator.

The determination of whether at least one of the voltage and the power demand can be met may be based on at least one of the following parameters: an operating state of the first converter; an actual input voltage of the first converter; an actual output voltage of the first converter; an actual charging status of the energy storage unit; an actual discharging voltage of the energy storage unit; an actual temperature of the energy storage unit; an actual speed of the electro-mechanical actuator; a desired speed of the electro-mechanical actuator; an actual torque or force of the electro-mechanical actuator; a desired torque or force of the electro-mechanical actuator; a sensor signal, in particular a sensor signal indicating at least one of a wind speed, a grid fault and a grid failure condition; and a control signal, in particular a control signal requesting at least one of an emergency control action and a fast movement of the electro-mechanical actuator. These and similar parameters allow the voltage or power demands to be determined for effectively controlling the wind turbine based on physical parameters of the electro-mechanical actuation system, knowledge of a desired control operation, or a combination thereof.

The step of determining whether at least one of the voltage demand and the power demand can be met may comprise at least one of determining that the voltage demand can be met if the first voltage exceeds an actual voltage at the electro-mechanical actuator by a predetermined voltage reserve, and determining that the power demand can be met if the first power exceeds a power requested from the electro-mechanical actuator by a predetermined power reserve. By considering a respective voltage and power reserve, the boost mode can be activated in time before the electro-mechanical actuator becomes voltage or power limited.

The step of determining whether at least one of the voltage demand and the power demand can be met may also comprise determining that at least one of the voltage demand and the power demand cannot be met if the desired torque or force of the electro-mechanical actuator exceeds a first boost threshold value, in particular a torque set-point threshold value or force set-point threshold value based on the actual speed of the electro-mechanical actuator. Accordingly, the boost mode can be activated based on known system parameters of the electro-mechanical actuator, with or without relying on measurement of electrical parameters, for example, of the DC link intermediate circuit.

The step of determining whether at least one of the voltage demand and the power demand can be met may comprise at least one of the following: determining that at least one adverse condition has occurred, in particular at least one of a wind gust condition, a grid fault ride through condition, and an adversity associated with at least one of hardware components and operational characteristics of the wind turbine; and determining that an emergency control action has been requested by a controller of the wind turbine, the emergency control action being in particular a high-speed pitching or feathering of rotor blades. Accordingly, the boost mode may be triggered alternatively or in addition by one or more sensors and/or control signals generated from other components of the wind turbine, such as a weather monitoring subsystem, a grid monitoring subsystem, a hardware or a software-based sensing system, and/or an operations controller, all of these communicatively interfaced with the turbine main controller and/or an actuation controller, which will be described later.

In an embodiment, the adversity may be, but not limited to a malfunction associated with a bearing or a gearbox of the pitch drive, or defects present in the pitch system components.

In another embodiment, the adversity may be, but not limited to an increase in viscosity of grease at lower temperatures where grease cannot move effectively for lubrication.

For example, the boost mode may be triggered whenever a high-speed pitching is requested, regardless of the actual output power or voltage supplied by the first converter. Alternatively, two or more conditions may be combined. Thus, as another example, the boost mode may be enabled in case a grid FRT situation, a wind gust condition or adversity in hardware components and/or operational characteristics are detected at the same time.

The method may further comprise at least one of the following: after activating the second converter, monitoring at least one of the voltage demand and the power demand of the electro-mechanical actuator, and disabling the boost mode if at least one of the voltage demand and the power demand of the electro-mechanical actuator falls below a first threshold; and continuously monitoring at least one of a charging status and a supply voltage of the energy storage unit, and disabling the boost mode, if at least one of the charging status and the supply voltage falls below a second threshold. By means of the above steps, the boost mode can be deactivated if it is no longer required and/or cannot be sustained by the energy stored in the energy storage unit.

As an example, the threshold voltages for activating and deactivating the boost mode may be the same. In this case, to avoid frequent switching on and off of the second converter, it may remain switched on for a predetermined minimum amount of time, e.g., 100 ms. As a second example, the first threshold used for switching off the boost mode may be set at a fixed offset or percentage value below a corresponding threshold used for activation the boost mode. For example, if a motor voltage is used for triggering the boost mode, the voltage used for switching off the boost mode may be set 10 Volt or 2% below the threshold for switching on the boost mode. Similarly, if a desired torque of the motor is used as a switching criterion, a set-point value of 1% less than the set-point value used to activate the boost mode may be used to deactivate the boost mode. As yet another example, in case the boost mode is activated for a fixed power threshold, i.e., for example, 20.0 kW, it may be deactivated at another, lower power demand, e.g., 19.5 kW. Similarly, for monitoring the energy storage unit using the second threshold, the boost mode may be deactivated, if the charge stored therein falls by a certain percentage, i.e., to 75% of its nominal charge, or by a fixed voltage, e.g., a voltage drop of the energy storage unit, e.g., a battery cell, by 0.2V.

According to a second aspect, an electro-mechanical actuation system for a wind turbine, in particular a yaw or a pitch system of the wind turbine, is provided. The system comprises a DC link intermediate circuit, a first converter connected on its input side to a supply grid and on its output side to the DC link intermediate circuit, the first converter being configured to provide at least one a first voltage and a first power to the DC link intermediate circuit, a bidirectional second converter configured to be connected between the DC link intermediate circuit and an energy storage unit, an electro-mechanical actuator, in particular a servo motor configured to be connected to the DC link intermediate circuit, and a controller. The controller is configured to determine whether at least one of a voltage demand and a power demand for operating the electro-mechanical actuator at a specific operating point can be met by an output of the first converter, and if at least one of the voltage demand and the power demand cannot be met by the first converter, trigger a boost mode of the second converter. By means of the boost mode the voltage at the DC link intermediate circuit is boosted to a second voltage, the second voltage being higher than the first voltage. Alternatively, or in addition, the power supplied to the electro-mechanical actuator via the DC link intermediate circuit is boosted to a second power, the second power being higher than the first power.

The electro-mechanical actuation system according to the second aspect enables implementation of the method according to the first aspect. Accordingly, reference is made to the discussion of advantages above.

The system may further comprise at least one of the following: a first measuring device connected to the DC link intermediate circuit and configured to provide an actual DC link voltage signal of the DC link intermediate circuit to the controller; a second measuring device connected to the electro-mechanical actuator and configured to provide an actual voltage signal of the electro-mechanical actuator to the controller; a third measuring device connected to the energy storage unit and configured to provide an actual discharging voltage signal of the energy storage unit to the controller; a fourth measuring device connected to the supply grid and configured to provide an actual grid voltage signal of the supply grid to the controller; a fifth measuring device connected to the electro-mechanical actuator and configured to provide an actual current signal of the electro-mechanical actuator to the controller; a sixth measuring device connected to the electro-mechanical actuator and configured to provide an actual speed signal of the electro-mechanical actuator to the controller; and a seventh measuring device connected to the electro-mechanical actuator and configured to provide an actual torque or force signal of the electro-mechanical actuator to the controller. By using one or more of the above measuring devices, the controller can analyze the current operating state of the electro-mechanical actuation system and accordingly activate the boost mode when necessary.

The first converter may comprise a rectifier circuit configured to rectify an AC grid supply voltage to a DC output voltage, the DC output voltage corresponding to the first voltage. Such a rectifier circuit, for example a full or a half-bridge rectifier, is relatively easy to construct and provides, by means of a suitable filter or DC link capacitor, an essentially fixed output voltage. Its output voltage is limited by the peak voltage of the AC input voltage.

The second converter may comprise a boost converter or a step-up converter configured to provide at least one of a variable output voltage and a variable output power to the DC link intermediate circuit, wherein, in the boost mode, the second converter controls at least one of the voltage and the power at the DC link intermediate circuit to correspond to at least one of the second voltage and the second power. Such a controllable, variable output converter can be used to control the voltage and/or power at the DC link intermediate circuit, which is provided to the electro-mechanical actuator.

The electro-mechanical actuator may be connected to a motor driver, in particular to an inverter circuit for driving the servo motor, the motor driver being configured to transform at least one of a voltage and a current of the DC link intermediate circuit into at least one of a voltage and a current required for driving the electro-mechanical actuator. Provision of a motor driver enables precise control of the electro-mechanical actuator. In particular, among other types of motors, permanent magnet synchronous (AC) motors, permanent magnet (DC) motors, or squirrel cage asynchronous (AC) motors may be employed as servo motors providing the required speed and torque for a yaw or pitch system of a wind turbine.

According to a third aspect, a wind turbine, comprising a rotor, a generator for transforming mechanical energy of the rotor into electrical energy, an energy storage unit, and the electro-mechanical actuation system according to the second aspect is provided. The generator and the electro-mechanical actuation system are connected by means of an auxiliary supply grid. The auxiliary supply grid, the energy storage unit and the electro-mechanical actuator of the electro-mechanical actuation system are communicatively coupled to the controller of the electro-mechanical actuation system, and the electro-mechanical actuation system controls at least one of a yaw and a pitch movement using the electro-mechanical actuator.

The wind turbine according to the third aspect is configured to implement the method according to the first aspect, thereby allowing a particularly fast control of certain subassemblies of the wind turbine. The options and advantages described above with respect to the first and second aspect also apply to the wind turbine according to the third aspect.

The electro-mechanical actuator may form part of a yaw or a pitch system, the electro-mechanical actuation system may be integrated into or coupled with an actuation controller of the yaw or a pitch system, and the energy storage unit may correspond to a yaw or a pitch energy storage unit. That is to say, the above system may be fully integrated into existing components, for example of a yaw or a pitch system, thereby alleviating the need to equip the wind turbine with further or additional components.

Further advantages, features and further developments are set out by the following exemplary embodiments which are explained in conjunction with the figures. The same or similar elements or elements acting in the same way are provided with the same reference numerals in the figures, wherein:
Figure 1 shows a schematic representation of a wind turbine.
Figure 2 shows a schematic representation of an electro-mechanical actuation system during a normal operating state.
Figure 3 shows a schematic representation of the electro-mechanical actuation system during an adverse grid condition.
Figure 4 shows a schematic representation of the electro-mechanical actuation system during a boost mode.
Figure 5 shows a flowchart of a first method for controlling an electro-mechanical actuator.
Figure 6 shows variation of torque of a servo motor at different speeds corresponding to different driving voltages.
Figure 7 shows a flowchart of a second method for controlling an electro-mechanical actuator in the form of a servo motor.
Figure 8 shows a flowchart of a third method for controlling an electro-mechanical actuator in the form of a linear actuator.

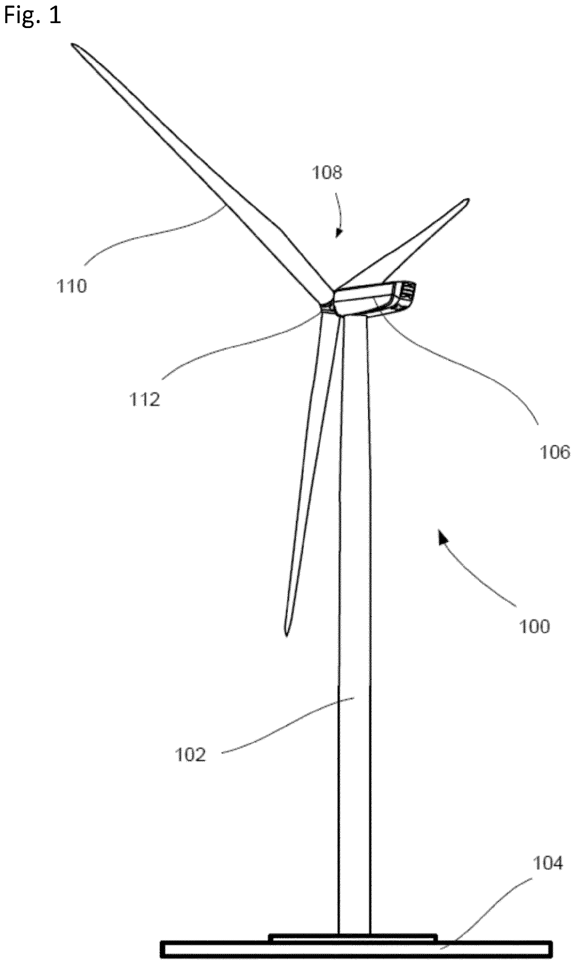

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted.

The nacelle 106, for example, comprises a generator (not shown) which is coupled to a rotor 108 via a rotor shaft (not shown). The rotor 108 comprises one or more (wind turbine) rotor blades 110, which are movably arranged on a rotor hub 112.

During operation, the rotor 108 is set in rotation by an air flow, in particular aerodynamic forces resulting from the interaction of wind with the blades. This rotational movement is transmitted to the generator via the rotor shaft, with or without a gearbox. The generator converts the mechanical energy of the rotor 108 into electrical energy.

To control the rotational speed of the rotor 108, the rotor blades 110 can be adjusted by rotating them about their longitudinal axis. This rotation is performed by a pitch actuation system, comprising one or more pitch drives. Alternatively, or in addition, the rotational speed or other characteristics of the rotor 108 can be controlled by rotating the entire nacelle 106, thereby adjusting the relative angle between the rotor main axis and the direction of the wind. This rotation of nacelle and the rotor into the direction of wind or away from the wind is performed by a yaw system, comprising one or more yaw drives. The pitch and yaw systems also facilitate the rotor to be brought into reduced power mode or standstill during extreme or adverse situations, for example, during wind gusts, failure of components, etc.

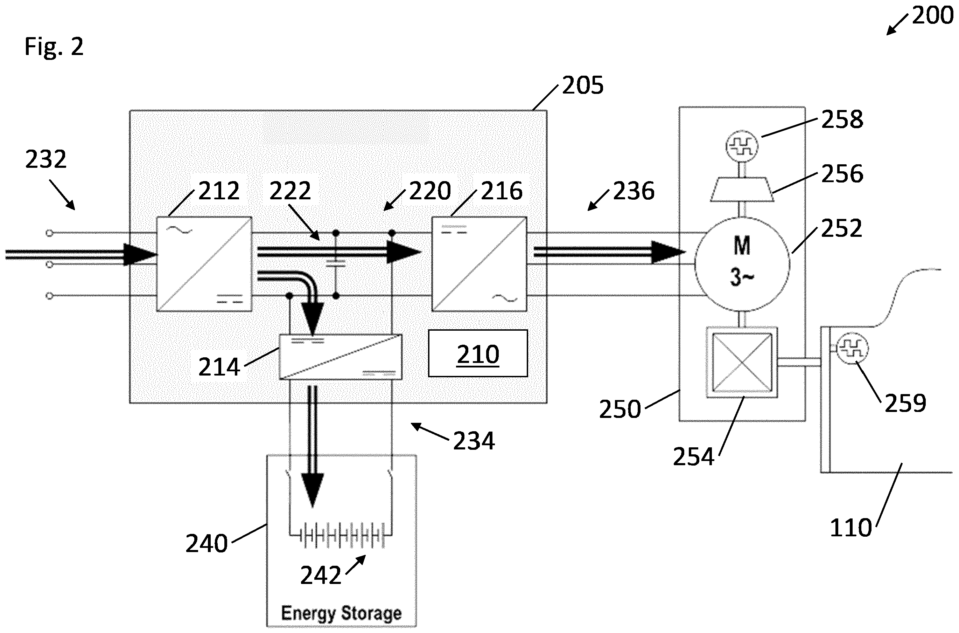

Figure 2 shows, in a schematic manner, an electro-mechanical actuation system 200 of the wind turbine 100.

In the following, a pitch system is described as an example, wherein, an electro-mechanical actuator 250 forms part of the pitch system. The electro-mechanical actuation system 200 is associated with an actuation controller 210, which is also referred to as a pitch controller in connection with the pitch system. An energy storage unit 240 corresponds to a pitch energy storage unit. Nonetheless, the disclosed actuation system 200 may also be implemented as a part of a yaw system or as a part of any other electro-mechanical actuation system of the wind turbine 100.

The actuation system 200 comprises a converter system 205 that interconnects a supply grid (not shown) with the energy storage unit 240 and the electro-mechanical actuator 250. The converter system 205 may comprise a first converter 212, a second converter 214 and an inverter 216. The first converter 212, the second converter 214 and the inverter 216 may be interconnected by means of a DC link intermediate circuit 220 (interchangeably referred to as "DC link" throughout for simplicity). The first converter 212, the second converter 214 and the inverter 216 interconnected by means of a DC link intermediate circuit 220, together with the actuation controller 210, may be collectively referred to as a converter system 205. In an embodiment, the inverter 216 may be optional depending on the type of electro-mechanical actuator 250 employed in the actuation system 200. For instance, an electro-mechanical actuator 250 such as a DC motor may be configured to be powered from the DC link 220 directly without the need of an inverter 216. Thus, the electro-mechanical actuator 250 is configured to be powered from the DC link 220, with or without an inverter 216. In another embodiment, the actuation controller 210 may be internally or externally configured relative to the converter system 205. Further, in addition to two respective power rails, the DC link intermediate circuit 220 may comprise of one or more DC link capacitors 222.

The first converter 212 is configured as an AC/DC converter, for example, a unidirectional or a bi-directional AC/DC converter. In particular, it may be a full or half-wave rectifier circuit rectifying a three-phase AC voltage received from a supply grid input 232 into a corresponding DC output voltage provided to the DC link intermediate circuit 220. For example, for a grid voltage of an auxiliary supply grid of the wind turbine 100 having a root mean square (RMS) voltage of 400 V, a DC link voltage of approximately 565 V at the DC link intermediate circuit 220 may be obtained by operating the first converter 212. Alternatively, an actively controlled rectifier circuit may be used, e.g., in case higher power or better control is required.

Note that in absence of further voltage sources, the first converter 212 may effectively control the DC link voltage, and that, in case of a simple rectifier, the DC link voltages on its output side is correlated directly to the AC input voltage on its input side.

The second converter 214 may be configured as a bidirectional DC/DC converter. This means that the second converter 214 may take a voltage provided from the DC link intermediate circuit 220 and convert it into appropriate voltage for charging the energy storage unit 240. Inversely, the second converter 214 can convert a discharge voltage provided by the energy storage unit 240 to an appropriate DC link voltage for the DC link intermediate circuit 220. For this purpose, the second converter 214 may comprise one or more step-up (also referred as boost converters) and/or step-down converters.

According to some embodiments, the voltage provided at an energy storage terminal 234 will be lower than the DC voltage provided by the first converter 212 to the DC link intermediate circuit 220. Accordingly, the second converter 214 may comprise a step-down converter or perform a function of a step-down converter to convert the voltage of the intermediate circuit 220 into a lower voltage for charging one or more storage elements of the energy storage unit 240. In the depicted example, a number of battery cells 242 are used to store electrical energy provided by the second converter 214. However, in another embodiment, a number of so-called supercapacitors or ultracapacitors may be provided as storage elements of the energy storage unit 240.

As depicted in Figure 2, during a normal operation of the wind turbine 100, the converter system 205 receives energy from the supply grid input 232 and uses it to provide operating energy to the inverter 216 and the actuator 250 connected thereto. In addition, part of the energy supplied via the first converter 212 may also be used to charge the energy storage cells of the energy storage unit 240 using the second converter 214. In one embodiment, the phrase "normal operation of the wind turbine" herein above and below may refer to a condition where power at the supply grid 232 is sufficiently available to supply power, among other components, to the converter system 205, the actuator 250 and the energy storage unit 240 to ensure normal functioning of the converter system 205, the actuator 250 and the energy storage unit 240. The normal functioning may be, for example, pitching or yawing operations associated with the wind turbine using available power from the supply grid 232.

In the presented example, the inverter 216 converts the DC link voltage provided by the DC link intermediate circuit 220 into a three-phase AC voltage and provides it at respective terminals 236 of the actuator 250, for example, the three phase terminals 236 of a servo motor 252. In the described example, a so-called permanent magnet synchronous motor (PMSM), which is typically an AC motor, is used. The PMSM may be, for example, an integrated permanent magnet motor (IPM) or a surface permanent magnet motor (SPM). However, other motor types, such as squirrel cage asynchronous (AC) motors, or permanent magnet DC motors (like brushless and brushed DC motors) may be employed. In an alternate embodiment, an entirely different type of an actuator, such as a linear actuator, may be employed.

Considering the example of a servo motor 252, a motor axis of the servo motor 252 is connected via a gearbox 254, to each of the rotor blades 110 to control its pitch angle. One or more sensors 258, 259 may provide respective control signals back to a respective control circuit (210) of the actuator 250. In the presented example, a first sensor 258 is coupled directly to the electro-mechanical actuator 250, e.g., above a brake 256 as shown in Figure 2. The sensor 258 may be, for example, a motor mounted encoder used in association with the control of the electro-mechanical actuator 250. The second sensor 259 may be coupled to the rotor blades 110 and may be, for example, a blade encoder used for validation and monitoring of the pitch angle. The control circuit may analyze the control signals received from one or both of the sensors 258 and 259 to determine a current pitch angle, pitching speed or the like. In other embodiments, corresponding control signals may be provided back directly to the actuation controller 210 for direct control of the servo motor 252 through the inverter 216. Similarly, the control circuit or the actuation controller 210 may receive signals corresponding to measurement of certain parameters, including, but not limited to present voltage and current of the servo motor 252. In some embodiments, other sensors such as, but not limited to motor shaft encoders (speed and rotational angle or position) may be used. Alternately, sensor less controllable motors may be used.

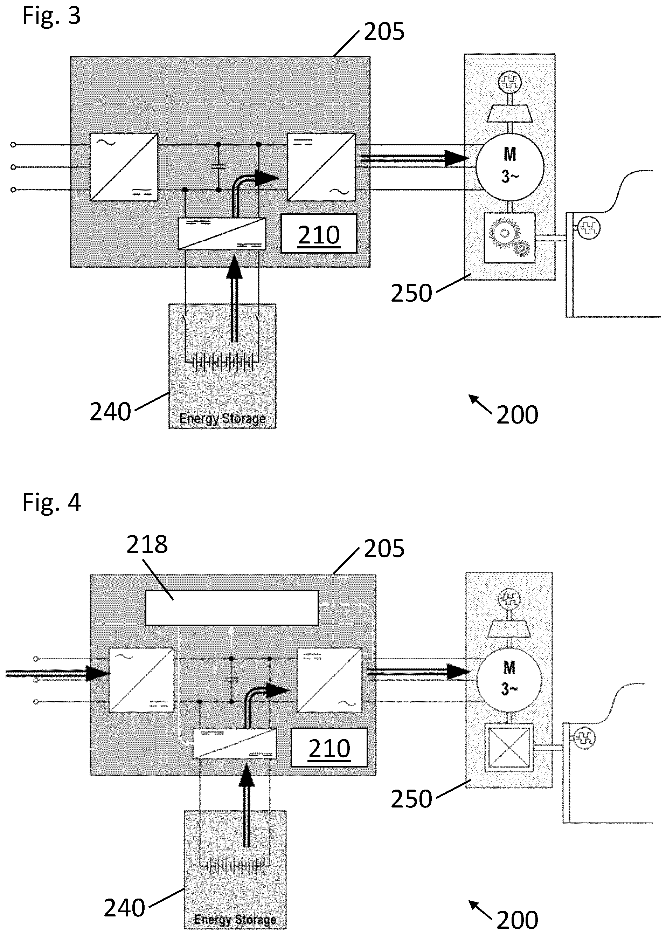

Figure 3 illustrates an embodiment of the same actuation system 200 during a complete outage or fault of the grid supply voltage, or during an adverse situation (like voltage ride-through) where power from the grid cannot be effectively used for pitching. During one or more of such scenarios, the energy required to operate the servo motor 252 of the actuator 250 is supplied by the energy storage unit 240. Supply of energy from the energy storage unit 240 may be effectuated, for example, when the blades of the rotor 108 are required to be pitched to safe operating pitch angles during a power outage or fault in the grid or any other condition that may be unfavorable for normal operation of wind turbine. Similarly, such a situation may arise during service and maintenance, or in the case of an electrical (hardware) failure of an internal supply grid or any other associated component, or in the event of software malfunction associated with the wind turbine 100.

In these scenarios, the second converter 214 converts the DC voltage and/or power received at the energy storage terminal 234 into a corresponding DC link voltage and/or into a corresponding DC link power at the DC link intermediate circuit 220. This way, the energy storage unit 240 together with the second converter 214 may serve as standby power/energy supply for keeping the electro-mechanical actuator 250 in continuous (uninterrupted) operation when the supply grid 232 power cannot be used. Furthermore, the second converter 214 may comprise or may be configured as a step-up converter to boost a discharge voltage and/or discharge power of the energy storage device, such as to a voltage of 565 V. Associated control and operation of the electro-mechanical actuator 250 are as described before and is therefore not described here again.

In the scenario shown in Figure 3, the output voltage and/or power of the second converter 214, may essentially correspond to the output voltage and/or power provided by the first converter 212 during normal operation. Thus, this operating state may be described as a back-up mode of the wind turbine 100.

Figure 4 shows a different operating state of the actuation system 200. In particular, it shows a boost mode employed to facilitate a fast movement of the actuator 250 and/or an emergency control action with respect to the actuation system 200. A fast movement, according to some embodiments, may exceed an upper threshold speed of the servo motor 252. In other embodiments, a fast movement may exceed an upper threshold torque of the servo motor 252, the torque may or may not be in tandem with the speed. It may be a speed encountered during emergency pitching operations or during other operations, including, but not limited to fast pitching of the rotor blade back to operating pitch angles from safe pitch angle (position) of the rotor blade, wherein a particularly high motor speed and/or torque is desired. An emergency control action may comprise a safety run of the pitch system, for example during a hardware or a software malfunction, or an action for extreme gust mitigation, e.g., bringing the rotor 108 to a standstill by initiating a corresponding emergency control sequence.

In an embodiment, an emergency control action may be requested by a main or turbine controller (not shown) of the wind turbine 100, and may be implemented as a programmable logic controller (PLC). The emergency control action may be requested by the main or turbine controller in response to one or more signals received from various sensors, and thereafter, the emergency control action (or sequence) may be initiated by the same controller to bring the rotor to a safe operating mode.

In an embodiment, the main or turbine controller is communicatively associated with the converter system 205.

As indicated in Figure 4, during such a situation at least some power may be provided at the supply grid input 232. For example, during a so-called fault-ride through (FRT), i.e., a relatively short interruption or fluctuation of a voltage provided by an external supply grid, the first converter 212 may still provide a DC voltage to the DC link intermediate circuit 220. For example, during a short interruption, the rotor 108 may still be rotating, such that the generator of the wind turbine 100 generates electrical energy internally. However, during such a situation, a particularly fast adjustment of mechanical components of the wind turbine 100 may be desirable. In particular, it may be desirable to quickly turn the rotor 108 or the rotor blades 110 out of or away from the wind. When the condition restores to normalcy, the mechanical components, like the rotor 108 or the rotor blades 110 among other components may be turned back to the normal operating positions.

To facilitate this operation, the actuation controller 210 associated with the converter system 205 activates a specific circuit part or operating routine, for example, the one indicated as boost controller 218 in Figure 4. While the (boost) controller 218 is shown as a separate module (software or hardware), circuit part or routine compared to the (actuation) controller 210 (software or hardware), the same functionality may be implemented using a single module, e.g., a single controller chip, or combined operating routine, for example for selective control of pitching with a first, lower or normal, or second, higher pitching speed.

In such a situation, the controller 218 (or 210) will control the second converter 214 to attain an increased voltage and/or additional power at the DC link intermediate circuit 220. The increased DC link voltage and/or power may be used to drive the electro-mechanical actuator 250 with the higher speed and a relatively higher torque to perform the desired operation.

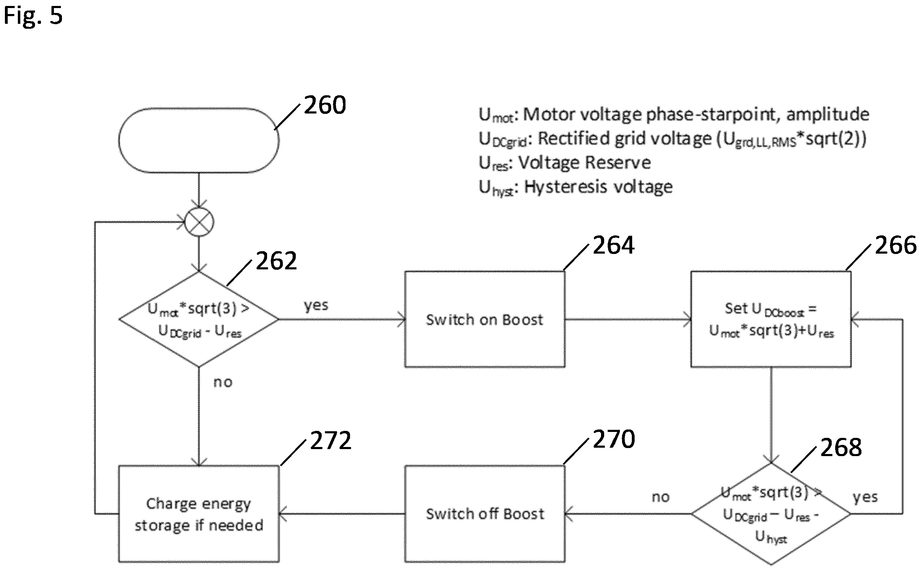

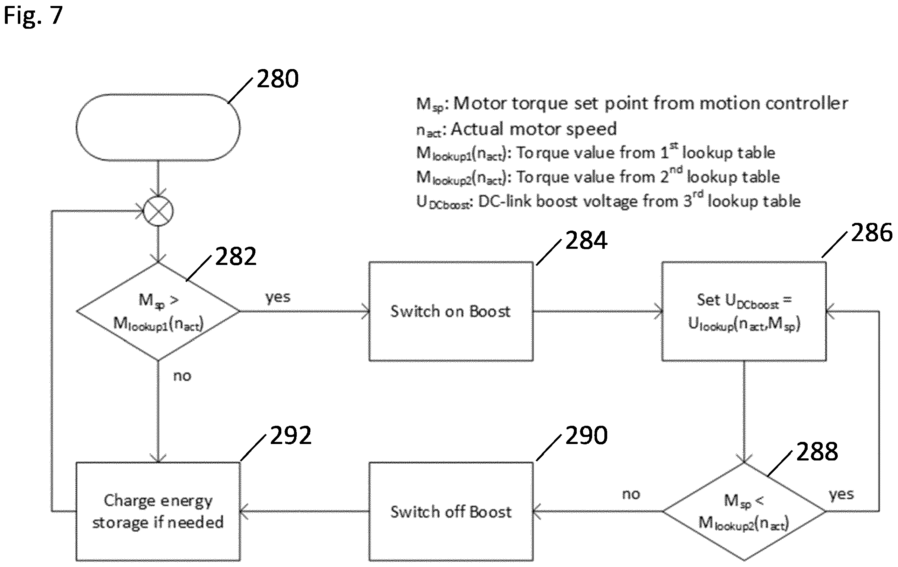

In the following, at first an embodiment in which the voltage of the DC link intermediate circuit 220 is boosted to a higher voltage will be described with reference to Figure 5. A further embodiment is later described with reference to Figure 7, where the controller 218 (or 210) may also control the second converter 214 to provide additional electric current and/or power to the DC link intermediate circuit 220.

Figure 5 shows a first method for controlling the actuation system 200 performed by the controller 218 (or 210). In the present case, since controller 218 performs boost function, it may be alternately referred to as a "boost controller 218" without limiting the scope. The control method starts at step 260 and effectively implements a continuous closed loop for controlling the DC link voltage. Further, for the purpose of illustration of the method, a 3-phase synchronous AC motor that performs pitching of a rotor blade is considered herein below.

At step 262, the boost controller 218 compares a motor (actuator) voltage Uₘₒₜ with a rectified grid voltage U_{DCgrid} corresponding to the AC grid voltage at the supply grid input 232, to determine if a boost mode should be activated. In the described example, Uₘₒₜ is the actual motor voltage, defined as a peak-to-peak voltage or as an amplitude voltage value, from one of the 3-phase lines to a star-point (or star-intersection). A corresponding first measurement circuit monitors the voltage Uₘₒₜ provided from the inverter 216 at one or more of the motor terminals 236 to the servo motor 252. The measured AC voltage of the motor is multiplied by an appropriate factor, for example, the square root of 3, to determine the corresponding DC input voltage needed for the inverter 216. U_{DCgrid} may be the output voltage (DC) of the first converter 212, i.e., a grid sided rectifier 212 in this case, which in a phase-to-phase 400V (RMS) AC supply grid corresponds to a DC voltage U_{DCgrid} of approximately 565V.

When a voltage reserve between the actual DC link voltage (or rectified grid voltage) and the needed voltage for the motor falls below a defined threshold Uᵣₑₛ, the boost controller 218 activates a boost mode to boost the voltage at the DC link 220. Note that the determined voltage difference U_{DCgrid} - Uᵣₑₛ is used as a switch-on threshold value for activating the second converter 214 based on comparison with the actual (measured) motor voltage Uₘₒₜ. Activating the boost mode 264 comprises activating the second converter 214 through the boost controller 218. In particular, this means to switch the second converter 214 into an operating mode, wherein the energy storage terminal 234 is used as an input terminal for the second converter 214 for providing an output DC voltage from the energy storage unit 240 to the DC link intermediate circuit 220.

In step 266, the boost controller 218 sets the output voltage of the second converter 214 to a desired boost mode output voltage U_{DCboost}. In other words, the boost controller 218 together with the second converter 214 sets a higher (boosted or amplified) voltage set-point at the DC link intermediate circuit 220. In the described example, the set-point for the DC link intermediate circuit 220 is set so that the defined (higher) voltage reserve Uᵣₑₛ is reached. Accordingly, the output voltage U_{DCboost} is set to the sum of the current motor voltage Uₘₒₜ*sqrt(3) and the desired voltage reserve Uᵣₑₛ. In other words, the DC link voltage U_{DCgrid} which was lesser than the sum of the current motor voltage Uₘₒₜ*sqrt(3) and the desired voltage reserve Uᵣₑₛ before the boost mode, is boosted (by setting a higher set-point voltage) so that it becomes equal to the sum of the current motor voltage Uₘₒₜ*sqrt(3) and the desired voltage reserve Uᵣₑₛ upon boost. This indicates that a boosted (amplified or stepped-up) voltage is available at the DC link 220 as an input to the motor 250.

In an embodiment, the boosted voltage at the DC link 220 as described above may be used by the motor 250 for fast pitching of rotor blades 110 at a relatively higher torque from operating pitch angles to safe pitch angles (e.g., feathering position) when an adverse event is encountered. The higher torque output of the motor 250 in such a condition may be attained by overcoming the field weakening effect experienced by the motor 250 at higher rotational speeds. In another embodiment, the boosted voltage at the DC link 220 as described above may be used by the motor 250 for fast pitching of rotor blades 110 back from safe pitch angles (e.g., feathering position) to operating pitch angles when the adverse event has ended. Here, like the previous case, the higher torque output of the motor 250 is attained by overcoming the field weakening effect experienced by the motor 250 at higher rotational speeds.

Note that this configuration results in an increased DC link voltage at the DC link capacitor 222, which will exceed the maximum output voltage U_{DCgrid} of the first converter 212. Accordingly, while the first converter 212 still receives an input voltage at the supply grid input 232, it will not provide any energy to the DC link intermediate circuit 220 as indicated in Figure 4.

After activating the boost mode, the boost controller 218 continues to monitor the motor voltage Uₘₒₜ. To switch off the boost mode, the DC link voltage needed for the motor 252 must fall so that the needed reserve Uᵣₑₛ plus a hysteresis U_{hyst} can be reached from the grid voltage U_{DCgrid} alone. U_{hyst} can be a constant or a variable factor depending on the actual motor current or energy storage current, or any other parameter associated with the motor and/or energy storage unit. A current dependent U_{hyst} accounts for the voltage drop expected on the grid side once the boost mode is switched off. This is depicted by steps 268 and 270.

In the described embodiment, the boost controller 218 compares the motor voltage Uₘₒₜ in step 268 with the DC grid voltage U_{DCgrid} minus the voltage reserve Uᵣₑₛ and a hysteresis value U_{hyst}. Note that the term U_{DCgrid} - Uᵣₑₛ - U_{hyst} is used as a switch-off threshold value for deactivating the second converter 214 based on comparison with the current motor voltage Uₘₒₜ. As long as the motor voltage exceeds the above term, the boost controller 218 will adjust the boost mode output voltage U_{DCboost} provided by the second converter 214 as described above.

If the motor voltage drops further than the respective voltage reserve Uᵣₑₛ and hysteresis value U_{hyst}, the boost mode will be deactivated in step 270. This means that the second converter 214 will be completely deactivated or be reconfigured to operate in the opposite direction. Note that in this case the voltage U_{DCgrid} provided by the first converter 212 may be sufficient to power the actuator 250.

Note that the same threshold values may be used to activate and deactivate the boost mode, i.e., the hysteresis value U_{hyst} may be zero in some embodiments. However, in this case a certain delay, e.g., 100 ms, should be implemented between steps 264 and 270, for example between steps 266 and 268, to ensure a steady state and avoid a frequent switching on and off of the boost mode of the second converter 214.

Further note that the measured currents and voltages on grid, motor, and/or energy storage side may be filtered before the boost mode is activated or deactivated by the boost controller 218 for improved stability. Similarly, switching off can be delayed ensuring that a steady state may be reached.

In an optional step 272, the energy storage unit 240 may be charged with some of the power provided by the first converter 212 to the DC link intermediate circuit 220. Charging of the energy storage unit 240 may be controlled by the actuation controller 210, the boost controller 218 or another controller of or associated with the actuation system 200 inside or outside the converter system 205 in accordance with a specified charging routine. For example, in case of a battery, it may depend on a measured battery voltage or length of the previous activation of the second converter in the boost mode.

In other embodiment, the energy storage unit 240 may be charged by an external power source independent of the supply grid, for example, by power harnessed from solar radiation, diesel generator, etc.

From step 272, the algorithm returns to step 262, for monitoring the motor voltage to activate the boost mode again, if required.

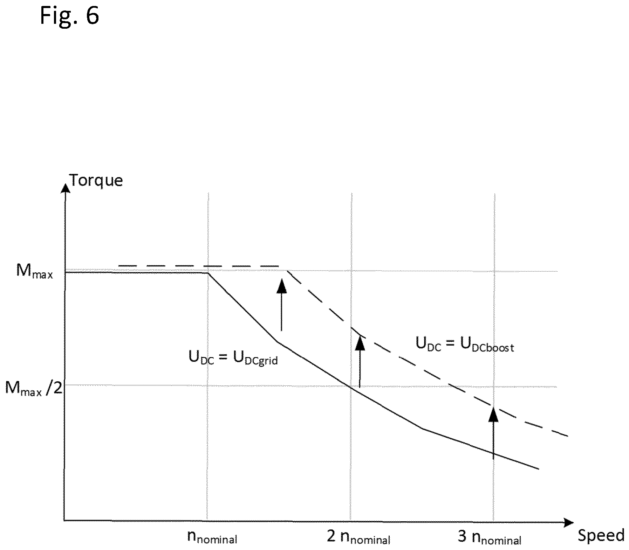

The effects of increasing the DC link voltage according to the method outlined above with reference to Figure 5 is graphically illustrated in the diagram of Figure 6. Figure 6 shows the torque of a servo motor as a function of its motor speed. The solid line shows the maximum torque available without boosting the voltage of the DC link intermediate circuit 220, e.g., in case the DC link voltage U_{DC} corresponds to the first or regular DC voltage U_{DCgrid} provided by the first converter 212. In comparison, the dashed line shows the maximum torque available in case the boost mode of the actuation system 200 is activated, i.e., in case at least some additional power and/or voltage is provided by the second converter 214 to the DC link 220. In the depicted example, the DC link voltage U_{DC} is raised to a higher, second voltage U_{DCboost} to enable a higher torque at medium to high motor speeds. The shift (or raise) in torque values corresponding from the unboosted voltage U_{DCgrid} to the boosted voltage U_{DCboost} is significant as the motor speed increases. For instance, at twice the nominal speed (ηₙₒₘᵢₙₐₗ) of the motor, the torque may be boosted from nearly half of its maximum value (Mₘₐₓ) to nearly 65%-70% of its maximum value (Mₘₐₓ). In some embodiments, it may go higher than 70% maximum value (Mₘₐₓ).

The peak power demand on a pitch motor usually occurs when the rotor blades 110 of a wind turbine 100 need to be accelerated fast at a high speed and high torque. As described above, this typically occurs during or right after a grid fault ride through (FRT) event or during adverse conditions like wind gusts where blades need to be pitched quickly and reliably to safe pitch angles. The peak power may be higher than the normal operating power of a servo motor by a factor of, for example, three to five times. For a motor speed below a nominal value, nₙₒₘᵢₙₐₗ, the maximum torque, Mₘₐₓ, is determined by the maximum current that the first converter 212 can deliver, assuming that it lies within the maximum current that the motor 252 can withstand. However, for higher motor speeds, the first converter 212 has to overcome the voltage induced by the poles of the motor 252 into corresponding windings to drive a current through them and control the motor 252. Accordingly, the converter 212 needs to create an opposing field to lower the motor voltage. This in turn limits the available current to drive the motor 252 and thus the maximum torque of the actuator 250. This effect is known and referred to as "field weakening".

As indicated by the dashed line of Figure 6, in the case that the second converter 214 is used to increase the DC link voltage U_{DC} from the DC grid voltage U_{DCgrid} of the first converter 212 to a higher boost mode voltage U_{DCboost} of the second converter 214, an increased motor voltage is possible, such that field weakening is mitigated at medium motor speeds and significantly reduced even at higher motor speeds. This in turn enables a higher torque of the actuator 250 at higher speeds as shown in Figure 6, enabling fast and reliable pitching of the blades to the safe position during an adversity and back from the safe position to optimal operating positions, in the example of a pitch system.

As the voltage and/or power at the DC link 220 is boosted only for short peaks (duration), the energy storage unit 240 is not significantly discharged. Moreover, the peak power (or torque) requirement by the electro-mechanical actuator 250 is not on a continuous basis, but only during certain scenarios or so-called "specific operating points" which lasts only for a few hundred milliseconds, ensuring that the energy storage unit 240 does not drain easily.

Figure 7 shows a second embodiment of a method for controlling the electro-mechanical actuator 250. Unlike in the previous embodiment, the motor control is performed on a higher, logical level, i.e., without the need to provide direct voltage monitoring. In this embodiment, a desired motor speed and torque set-point of the servo motor 252, provided either as separate values or combined as a desired motor power, can be used as criteria to switch on or off the boost functionality of the second converter 214. Suitable values may be provided as fixed values at the design stage, and may be derived from mathematical formulae, models or historical data stored in a memory, which describe the motor characteristics. For example, it may be desirable to activate a boost function based on a desired torque threshold, e.g., at a torque value of about 90%-95% of the maximum torque of a servo motor without boost specified for a given motor speed, e.g., 1000 rpm.

In the described, non-limiting example, values that are used to switch on and off the boost function are stored in separate first and second lookup tables based on a desired motor speed. A respective boost voltage used to configure the output of the second converter 214 is stored in a third table. In some scenarios, other parameters, such as the energy level of the energy storage unit 240 dropping below a certain limit, or motor peak threshold voltage may be set to deactivate the boost mode by the second converter 214 along with the controller 218. In yet another embodiment, the boost mode may be deactivated in a timed manner, for example, the boost mode may last till 5-7 seconds after its activation and then may be deactivated. These ensure that the safe operating conditions are maintained with respect to the actuation system and at the same time, ensure that the energy storage unit 240 has sufficient energy to discharge to the actuator during emergency/FRT situations.

Accordingly, after the method starts in step 280, the boost controller 218 compares, in step 282, a motor torque set-point Mₛₚ received from a motion controller with a torque value from a first lookup table, Mₗₒₒₖᵤₚ₁ (n_{act}) for a desired motor speed n_{act}.

If the motor torque set-point Mₛₚ exceeds the threshold from the first lookup table, in step 284, the second converter 214 is activated to boost the voltage. Particularly, in step 286, the second converter 214 is configured to provide a boost mode output voltage U_{DCboost} corresponding to a voltage value Uₗₒₒₖᵤₚ referenced from the values stored in a third lookup table. The setpoint voltage Uₗₒₒₖᵤₚ for the boost mode output voltage U_{DCboost} may be dependent on the current motor speed n_{act}, and the desired motor torque set-point Mₛₚ.

Thereafter, the boost controller 218 continuously monitors the motor torque set-point Mₛₚ with respect to a torque value Mₗₒₒₖᵤₚ₂ of the second lookup table. As described with regard to the first lookup table, the second torque value Mₗₒₒₖᵤₚ₂ is dependent on the current motor speed n_{act}. Note that the difference between the values Mₗₒₒₖᵤₚ₁ stored in the first lookup table and the values Mₗₒₒₖᵤₚ₂ stored in the second lookup table effectively implement a hysteresis function for the control loop, which in turn prevents frequent activation and deactivation of the boost mode. This is particularly advantageous in maintaining a stable functionality of the second converter 214 and the energy storage unit 240.

As long as the motor torque set-point remains below the second look-up table torque value Mₗₒₒₖᵤₚ₂, the boost mode output voltage U_{DCboost} is adjusted to according to the setpoint Uₗₒₒₖᵤₚ based on the current motor speed n_{act} and the present motor torque set-point Mₛₚ. If the motor torque set-point Mₛₚ exceeds the value provided from the second lookup table Mₗₒₒₖᵤₚ₂, the boost functionality is deactivated in a step 290. Thereafter, the energy storage unit 240 may be recharged in step 292 using the second converter 214 as described before with respect to Figure 5.

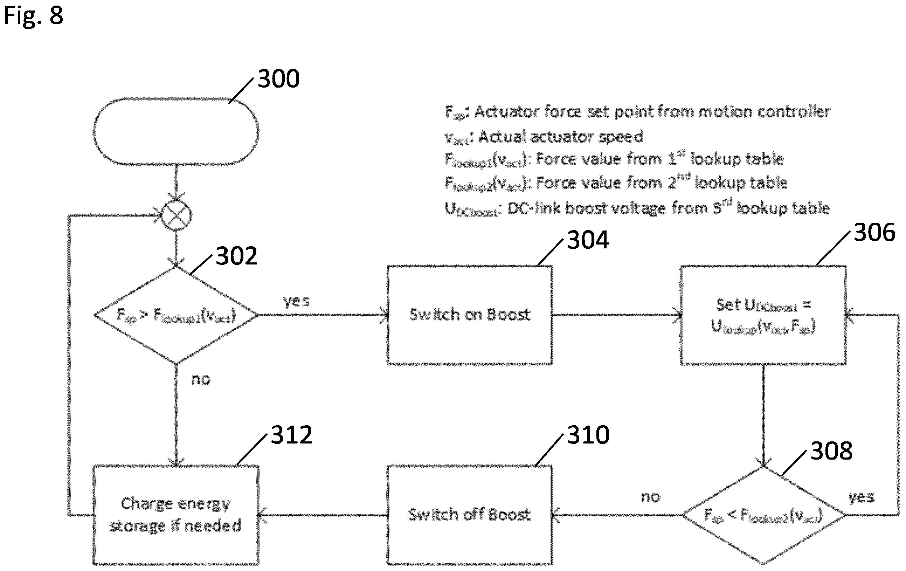

Figure 8 shows a third embodiment of a method for controlling the electro-mechanical actuator 250. Unlike in the previous embodiment, operation of linear actuator is controlled. Thus, instead of a torque of a motor, a (linear) force of the linear actuator is used as control variable of a control loop. Similar to the second embodiment of Figure 7, suitable values for implementing the control behavior are stored in lookup tables as described above.

After the method starts in step 300, the boost controller 218 compares, in step 302, an actuator force set-point Fₛₚ received from a motion controller with a force value from a first lookup table, Fₗₒₒₖᵤₚ₁ (v_{act}) for a desired actuator speed V_{act}.

If the actuator force set-point Fₛₚ exceeds the threshold from the first lookup table, in step 304, the second converter 214 is activated to boost the voltage. Particularly, in step 306, the second converter 214 is configured to provide a boost mode output voltage U_{DCboost} corresponding to a voltage value Uₗₒₒₖᵤₚ referenced from the values stored in a third lookup table. The setpoint voltage Uₗₒₒₖᵤₚ for the boost mode output voltage U_{DCboost} may be dependent on the current actuator speed v_{act}, and the desired actuator force set-point Fₛₚ.

Thereafter, the boost controller 218 continuously monitors the actuator force set-point Fₛₚ with respect to a force value Fₗₒₒₖᵤₚ₂ of the second lookup table. As described with regard to the first lookup table, the second force value Fₗₒₒₖᵤₚ₂ is dependent on the current actuator speed v_{act}. Again, the difference between the values Fₗₒₒₖᵤₚ₁ stored in the first lookup table and the values Fₗₒₒₖᵤₚ₂ stored in the second lookup table effectively implement a hysteresis function for the control loop, which in turn prevents frequent activation and deactivation of the boost mode. As above, this is particularly advantageous in maintaining a stable functionality of the second converter 214 and the energy storage unit 240.

As long as the actuator force set-point Fₛₚ remains below the second look-up table force value Fₗₒₒₖᵤₚ₂, the boost mode output voltage U_{DCboost} is adjusted to according to the setpoint Uₗₒₒₖᵤₚ based on the current actuator speed v_{act} and the present actuator force set-point Fₛₚ. If the actuator force set-point Fₛₚ exceeds the value provided from the second lookup table Fₗₒₒₖᵤₚ₂, the boost functionality is deactivated in a step 310. Thereafter, the energy storage unit 240 may be recharged in step 312 using the second converter 214 as described before with respect to Figures 5.

Attention is drawn to the fact that the above three implementations are three out of a great number of possible control methods. For example, it is also possible to activate and deactivate the boost mode based on external sensor inputs and/or in situations where it is highly likely that the high torque or force is required by the actuator 250. For example, an external controller, such as a central controller of the wind turbine 100 could instruct the actuation controller 210 or boost controller 218 to initiate boosting, when it detects an extreme condition, such as a wind gust and/or a grid FRT. Alternatively, similar actions could be taken every time an emergency control action is received, such as a demand for high speed pitching the rotor blades 110 to safety position, or if the blades are to be pitched back at high-speed from the safety position to normal operating pitch angles to enable the rotor resume generating power. Of course, it is also possible to combine the above decision criteria and implementations. For example, the boost mode may only be activated in the case that the emergency pitching operation is performed and the current motor voltage exceeds a predetermined threshold value.

Attention is drawn once more to the fact that the described systems and methods for controlling an electro-mechanical actuator are applicable to a wide variety of control systems and components.

For example, while a battery-based energy storage unit 240 has been described, the method is particularly useful in the case that ultracapacitors are used for energy storage. Compared to batteries, so called ultracapacitors, also referred to as supercapacitors, can withstand higher charge and discharge currents and, also, a higher number of loading cycles. Accordingly, in a system using one or more ultracapacitors as energy storage, a frequent activation of the described boost mode does not lead to a significant reduction of the lifetime of the control system.

Moreover, while a pitching operation of the blades 110 has been described, higher actuator speeds may also allow a faster control of a yaw movement, thereby allowing the entire rotor 108 to be turned out of the wind at fast speeds.

Accordingly, the present invention shall not be limited by the specific examples provided above, but merely by the set of attached claims.

### List of Reference Symbols

- 100: wind turbine
- 102: tower
- 104: foundation
- 106: nacelle
- 108: rotor
- 110: rotor blade
- 112: rotor hub

- 200: actuation system
- 205: converter system
- 210: (actuation) controller
- 212: first converter
- 214: second converter
- 216: inverter
- 218: (boost) controller
- 220: DC link intermediate circuit
- 222: DC link capacitor
- 232: supply grid input
- 234: energy storage terminal
- 236: motor terminal
- 240: energy storage unit
- 242: battery storage cell
- 250: actuator
- 252: servo motor
- 254: gearbox
- 256: brake
- 258: first sensor
- 259: second sensor

- 260 to 312: methods steps

## Claims

1. A method for controlling an electro-mechanical actuator (250) of a wind turbine (100), in particular a servo motor (252) of a yaw or a pitch system of the wind turbine, the electro-mechanical actuator (250) configured to be powered from a DC link intermediate circuit (220), the method comprising:
- determining whether at least one of a voltage demand and a power demand for operating the electro-mechanical actuator (250) at a specific operating point can be met by an output of a first converter (212), the first converter (212) being connected to a supply grid on its input side and configured to provide at least one of a first voltage and a first power to the DC link intermediate circuit (220); and
- if at least one of the voltage demand and the power demand cannot be met by the output of the first converter (212), triggering a boost mode of a second converter (214) configured to be connected between the DC link intermediate circuit (220) and an energy storage unit (240) to at least one of:
○ boost the voltage at the DC link intermediate circuit (220) to a second voltage, the second voltage being higher than the first voltage; and
○ boost the power supplied to the electro-mechanical actuator (250) via the DC link intermediate circuit (220) to a second power, the second power being higher than the first power.

2. The method of claim 1, wherein the second converter (214) is activated in addition to the first converter (212) if at least one of the voltage demand and the power demand cannot be met by the output of the first converter (212).

3. The method of claim 1 or 2, wherein the second converter (214) is configured to provide a variable output to the DC link intermediate circuit (220), and wherein triggering the boost mode further comprises:
- determining at least one of the second voltage and the second power based on at least one of the voltage demand and the power demand for operating the electro-mechanical actuator (250); and
- at least one of
○ setting a DC link intermediate circuit voltage set-point to the second voltage; and
○ setting a power set-point for the power supplied to the electro-mechanical actuator (250) via the DC link intermediate circuit (220) to the second power.

4. The method of any preceding claim, wherein the determination of whether at least one of the voltage and the power demand can be met is based on at least one of the following parameters:
- an operating state of the first converter (212);
- an actual input voltage of the first converter (212);
- an actual output voltage of the first converter (212);
- an actual charging status of the energy storage unit (240) ;
- an actual discharging voltage of the energy storage unit (240) ;
- an actual temperature of the energy storage unit (240);
- an actual speed of the electro-mechanical actuator (250) ;
- a desired speed of the electro-mechanical actuator (250) ;
- an actual torque or force of the electro-mechanical actuator (250);
- a desired torque or force of the electro-mechanical actuator (250);
- a sensor signal, in particular a sensor signal indicating at least one of a wind speed, a grid fault and a grid failure condition; and
- a control signal, in particular a control signal requesting at least one of an emergency control action and a fast movement of the electro-mechanical actuator (250) .

5. The method of any preceding claim, wherein the step of determining whether at least one of the voltage demand and the power demand can be met comprises at least one of:
- determining that the voltage demand can be met if the first voltage (U_{DCgrid}) exceeds an actual voltage (Uₘₒₜ) at the electro-mechanical actuator (250) by a predetermined voltage reserve (Uᵣₑₛ); and
- determining that the power demand can be met if the first power exceeds a power requested from the electro-mechanical actuator (250) by a predetermined power reserve.

6. The method of any preceding claim, wherein the step of determining whether at least one of the voltage demand and the power demand can be met comprises:
- determining that at least one of the voltage demand and the power demand cannot be met if the desired torque (Mₛₚ) or force (Fₛₚ) of the electro-mechanical actuator (250) exceeds a first boost threshold value, in particular a torque set-point threshold value (Mₗₒₒₖᵤₚ₁(n_{act})) or force set-point threshold value (Fₗₒₒₖᵤₚ₁(v_{act})) based on the actual speed of the electro-mechanical actuator (250).

7. The method of any preceding claim, wherein the step of determining whether at least one of the voltage demand and the power demand can be met comprises at least one of the following:
- determining that at least one adverse condition has occurred, in particular at least one of a wind gust condition, a grid fault ride through condition, and an adversity associated with at least one of hardware components and operational characteristics of the wind turbine; and
- determining that an emergency control action has been requested by a controller, in particular a main or turbine controller, of the wind turbine (100), the emergency control action being in particular a high-speed pitching or feathering of rotor blades (110).

8. The method of any preceding claim, further comprising at least one of the following:
- after activating the second converter (214), monitoring at least one of the voltage demand and the power demand of the electro-mechanical actuator (250), and disabling the boost mode if at least one of the voltage demand and the power demand of the electro-mechanical actuator falls below a first threshold; and
- continuously monitoring at least one of a charging status and a supply voltage of the energy storage unit (240), and disabling the boost mode, if at least one of the charging status and the supply voltage falls below a second threshold.

9. An electro-mechanical actuation system (200) for a wind turbine (100), in particular a yaw or a pitch system of the wind turbine (100), comprising:
- a DC link intermediate circuit (220);
- a first converter (212) connected on its input side to a supply grid and on its output side to the DC link intermediate circuit (220), the first converter (212) being configured to provide at least one of a first voltage and a first power to the DC link intermediate circuit (220);
- a bidirectional second converter (214) configured to be connected between the DC link intermediate circuit (220) and an energy storage unit (240);
- an electro-mechanical actuator (250), in particular a servo motor (252) configured to be connected to the DC link intermediate circuit (220); and
- a controller (210, 218) configured to perform the following steps:
- determine whether at least one of a voltage demand and a power demand for operating the electro-mechanical actuator (250) at a specific operating point can be met by an output of the first converter (212); and
- if at least one of the voltage demand and the power demand cannot be met by the first converter (212), trigger a boost mode of the second converter (214) to at least one of:
○ boost the voltage at the DC link intermediate circuit (220) to a second voltage, the second voltage being higher than the first voltage, and
○ boost the power supplied to the electro-mechanical actuator (250) via the DC link intermediate circuit (220) to a second power, the second power being higher than the first power.

10. The system of claim 9, further comprising at least one of the following:
- a first measuring device connected to the DC link intermediate circuit (220) and configured to provide an actual DC link voltage signal of the DC link intermediate circuit (220) to the controller (210, 218);
- a second measuring device connected to the electro-mechanical actuator (250) and configured to provide an actual voltage signal of the electro-mechanical actuator (250) to the controller (210, 218);
- a third measuring device connected to the energy storage unit (240) and configured to provide an actual discharging voltage signal of the energy storage unit (240) to the controller (210, 218);
- a fourth measuring device connected to the supply grid and configured to provide an actual grid voltage signal of the supply grid to the controller (210, 218);
- a fifth measuring device connected to the electro-mechanical actuator (250) and configured to provide an actual current signal of the electro-mechanical actuator (250) to the controller (210, 218);
- a sixth measuring device connected to the electro-mechanical actuator (250) and configured to provide an actual speed signal of the electro-mechanical actuator (250) to the controller (210, 218); and
- a seventh measuring device connected to the electro-mechanical actuator (250) and configured to provide an actual torque or force signal of the electro-mechanical actuator (250) to the controller (210, 218).

11. The system (200) of claim 9 or 10, wherein the first converter (212) comprises a rectifier circuit configured to rectify an AC grid supply voltage to a DC output voltage, the DC output voltage corresponding to the first voltage.

12. The system (200) of any one of claims 9 to 11, wherein the second converter (214) comprises a boost-converter or a step-up converter configured to provide at least one of a variable output voltage and a variable output power to the DC link intermediate circuit (220), wherein, in the boost mode, the second converter (214) controls at least one of the voltage and the power at the DC link intermediate circuit (220) to correspond to at least one of the second voltage and the second power.

13. The system (200) of any one of claims 9 to 12, wherein the electro-mechanical actuator (250) is connected to a motor driver, in particular to an inverter circuit (216) for driving the servo motor (252), the motor driver being configured to transform at least one of a voltage and a current of the DC link intermediate circuit (220) into at least one of a voltage and a current required for driving the electro-mechanical actuator (250).

14. A wind turbine (100), comprising a rotor (108), a generator for transforming mechanical energy of the rotor (108) into electrical energy, an energy storage unit (240), and the electro-mechanical actuation system (200) according to any one of claims 9 to 13, wherein the generator and the electro-mechanical actuation system (200) are connected by means of an auxiliary supply grid, the auxiliary supply grid, the energy storage unit (240) and the electro-mechanical actuator (250) of the electro-mechanical actuation system (200) are communicatively coupled to the controller (210, 218) of the electro-mechanical actuation system (200), and the electro-mechanical actuation system (200) is configured to control at least one of a yaw and a pitch movement using the electro-mechanical actuator (250).

15. The wind turbine (100) of claim 14, wherein
- the electro-mechanical actuator (250) forms part of a yaw or a pitch system;
- the electro-mechanical actuation system (200) is integrated with or coupled to an actuation controller (210) of the yaw or the pitch system; and
- the energy storage unit (240) corresponds to a yaw or a pitch energy storage unit.
